# EUROPÄISCHE PATENTANMELDUNG

(11) **EP 3 409 448 A1**
(43) Veröffentlichungstag der Anmeldung: **05.12.2018**
(21) Anmeldenummer: 17174197.8
(22) Anmeldetag: 02.06.2017
(51) Int. Cl.: B29C 65/16, B05D 1/28, B29K 101/12

(54) **LASERDURCHSTRAHLFÜGEVERFAHREN UND ABSORPTIONSSCHICHT-APPLIZIERVORRICHTUNG SOWIE TEXTILE LASERDURCHSTRAHLSCHWEISSVORRICHTUNG UND TEXTILE KOMPONENTENSCHNEIDEVORRICHTUNG FÜR BIEGESCHLAFFE TRANSPARENTE KOMPONENTEN**

(71) Anmelder: Leister Technologies AG, 6056 Kägiswil (CH)
(72) Erfinder: Lehmeier, Frederike, 6064 Kerns (CH); Niederberger, Adolf, 6056 Kägiswil (CH)
(74) Vertreter: Klocke, Peter

(57) **Zusammenfassung**

Laserdurchstrahlfügeverfahren zum nahtförmigen Verbinden von flächigen biegeschlaffen Komponenten (2, 2'), wobei eine der Komponenten für Laserstrahlung transparent und die andere zumindest im Fügebereich absorbierend ist, und wobei als absorbierende Komponente eine Komponente benutzt wird, die größtenteils aus einem für die Laserstrahlung transparenten Kunststoffmaterial besteht, auf das im Fügebereich eine Absorptionsschicht (20) für die Laserstrahlung mittels einer Absorptionsschicht-Appliziervorrichtung (19) aufgebracht wird. Damit wird der Fügebereich für Laserstrahlung absorbierend ausgebildet. Die Absorptionsschicht (20) wird von einem Trägermaterial (26), das die Absorptionsschicht (20) als absorbierende Feststoffauflage oder Flüssigkeitsauflage trägt, unter Druckeinwirkung auf das transparente Kunststoffmaterial der absorbierenden Komponente (2) übertragen. Die Absorptionsschicht-Appliziervorrichtung (19) weist dazu ein kraftbeaufschlagbares Applizierelement (23, 24) und ein diesem gegenüberliegendes Stützelement (25) auf.

## Beschreibung

Die Erfindung betrifft ein Laserdurchstrahlfügeverfahren zum Verbinden von mindestens zwei flächigen biegeschlaffen Komponenten, in wenigstens einem Fügebereich mittels wenigstens einer Verbindungsnaht, wobei Komponenten verwendet werden, von denen wenigstens eine thermoplastisches Kunststoffmaterial aufweist, das in Form einer homogenen Folie oder eines textilen Stoffgebildes aus miteinander verschlungenen Kunststofffasern oder Kunststofffäden vorliegt, und von denen mindestens eine für Laserstrahlung transparent und mindestens eine zumindest im Fügebereich für die Laserstrahlung absorbierend ist, und wobei unter Einwirkung der Laserstrahlung mindestens die absorbierende Komponente lokal im Fügebereich erwärmt, dort mindestens partiell aufgeschmolzen und unter Druckbeaufschlagung mit der mindestens einen transparenten Komponente verbunden wird.

Die Erfindung betrifft außerdem Absorptionsschicht-Appliziervorrichtung zum Aufbringen einer Absorptionsschicht auf eine für Laserstrahlung transparente Komponente zum Verbinden von mindestens zwei flächigen biegeschlaffen Komponenten, in wenigstens einem Fügebereich mittels wenigstens einer Verbindungsnaht, im Laserdurchstrahlfügeverfahren, wobei wenigstens eine der Komponenten thermoplastisches Kunststoffmaterial aufweist, das in Form einer homogenen Folie oder eines textilen Stoffgebildes aus miteinander verschlungenen Kunststofffasern oder Kunststofffäden vorliegt, und mindestens eine der Komponenten für Laserstrahlung transparent und mindestens eine zumindest im Fügebereich für die Laserstrahlung absorbierend ist, und wobei sich unter Einwirkung der Laserstrahlung mindestens die absorbierende Komponente lokal im Fügebereich erwärmt, dort mindestens partiell aufschmilzt und sich unter Druckbeaufschlagung mit der mindestens einen transparenten Komponente verbindet.

Die Erfindung betrifft zudem eine textile Laserdurchstrahlschweißvorrichtung zur Durchführung des Laserdurchstrahlfügeverfahrens.

Die Erfindung betrifft außerdem eine textile Komponentenzuschneidevorrichtung zum Zuschneiden von mindestens einer biegeschlaffen Komponente, die mit einer anderen biegeschlaffen Komponente in wenigstens einem Fügebereich mittels wenigstens einer Verbindungsnaht im Laserdurchstrahlfügeverfahren verbindbar ist.

Das Verbinden von mindestens zwei flächigen biegeschlaffen Komponenten im Laserdurchstrahlfügeverfahren, in wenigstens einem Fügebereich mittels wenigstens einer Verbindungsnaht, ist beispielsweise aus dem Lasertextilschweißen von Kleidungsstücken als Stand der Technik bekannt. Dabei kommen Komponenten zum Einsatz, von denen wenigstens eine thermoplastisches Kunststoffmaterial aufweist, das in Form einer homogenen Folie oder eines textilen Stoffgebildes aus miteinander verschlungenen Kunststofffasern oder Kunststofffäden vorliegt, und von denen mindestens eine für Laserstrahlung transparent und mindestens eine zumindest im Fügebereich für die Laserstrahlung absorbierend ist. Die zumindest im Fügebereich für die Laserstrahlung absorbierende Komponente besteht häufig größtenteils aus einem für die Laserstrahlung transparenten Kunststoffmaterial, das mit Laserlicht absorbierendem Pigmenten vollständig eingefärbt, im Fügebereich mittels einem flüssigen Absorbers getränkt oder zumindest im Fügebereich mit einer absorbierenden Folie unterlegt ist, und somit mit der anderen Komponente verschweißt werden kann.

Das Einfärben der ganzen Komponente mit einem absorbierenden Pigment ist bei Kleidungstücken oft unbeliebt, da damit Einschränkungen betreffend die Farbwahl verbunden sind. Zudem verursacht eine vollständig eingefärbte absorbierende Komponente in der Regel Mehrkosten, da viel Pigment benötigt wird. Eine absorbierende Folie zwischen zwei transparenten Fügepartnern als Zwischenschicht zu legen, ist aufwändig und beeinflusst meist die Nahtoptik und das Nahtverhalten der Verbindungsnaht. Zudem ist die Zwischenschicht schwierig zu handhaben und bewirkt zusätzliche Kosten. Sie ist daher unvorteilhaft. Der lokale Auftrag eines flüssigen Absorbers im Fügebereich ist einfacher und kostengünstiger. Dies bringt jedoch den Nachteil mit sich, dass der mittels Spraydüse, Druckkopf, Stift oder Pinsel lokal aufgetragene flüssige Absorber tief in textiles Kunststoffmaterial eindringt und ein örtlich unterschiedliches Absorptionsverhalten je nach Eindringung in das Textil bewirkt. Außerdem führt dies ebenfalls zu Einschränkungen betreffend die Farbwahl. Zudem sind für eine automatische Verarbeitung kostspielige Fertigungseinrichtungen notwendig.

Ausgehend von dem vorstehend beschriebenen Stand der Technik liegt der Erfindung die Aufgabe zugrunde, eine Möglichkeit vorzuschlagen, die absorbierende Komponente aus einer für die Laserstrahlung größtenteils transparenten Kunststoffmaterial bestehenden Komponente herzustellen und diese allein im Fügebereich durch den Auftrag einer Absorptionsschicht absorbierend auszubilden, wobei die Absorptionsschicht eine gleichmäßige Dicke und eine scharfe Außenkontur aufweisen soll, sodass ein einheitliches Absorptionsverhalten sichergestellt ist und zugleich eine ansehnliche Nahtoptik und ein beständiges Nahtverhalten der Verbindungsnaht erreicht wird.

Diese Aufgabe wird erfindungsgemäß durch ein Laserdurchstrahlfügeverfahren mit den Merkmalen des unabhängigen Patentanspruchs 1, durch eine Absorptionsschicht-Appliziervorrichtung mit den Merkmalen des unabhängigen Patentanspruchs 8 sowie durch eine textile Laserdurchstrahlschweißvorrichtung mit den Merkmalen des nebengeordneten Patentanspruchs 13 und eine textile Komponentenzuschneidevorrichtung mit den Merkmalen des nebengeordneten Patentanspruchs 15 gelöst. Weitere vorteilhafte Ausführungsformen der Erfindung sind Gegenstand der jeweils abhängigen Patentansprüche.

Danach wird bei dem erfindungsgemäßen Laserdurchstrahlfügeverfahren zum Verbinden von mindestens zwei flächigen biegeschlaffen Komponenten, in wenigstens einem Fügebereich mittels wenigstens einer Verbindungsnaht, als absorbierende Komponente eine Komponente benutzt, die größtenteils aus einem für die Laserstrahlung transparenten Kunststoffmaterial besteht, auf das im Fügebereich eine Absorptionsschicht für die Laserstrahlung aufgebracht wird. Dabei werden Komponenten verwendet, von denen wenigstens eine thermoplastisches Kunststoffmaterial aufweist, das in Form einer homogenen Folie oder eines textilen Stoffgebildes aus miteinander verschlungenen Kunststofffasern oder Kunststofffäden vorliegt und von denen mindestens eine für Laserstrahlung transparent und mindestens eine im Fügebereich für die Laserstrahlung durch die aufgebrachte Absorptionsschicht absorbierend ausgebildet ist, sodass unter Einwirkung der Laserstrahlung mindestens die absorbierende Komponente lokal im Fügebereich erwärmt, dort mindestens partiell aufgeschmolzen und unter Druckbeaufschlagung mit der mindestens einen transparenten Komponente verbunden wird. Die absorbierende Komponente und/oder die transparente Komponente müssen die Eigenschaft für Laserstrahlung absorbierend oder transparent zu sein, nicht zu 100 Prozent erfüllen. Die transparente Komponente kann Laserlicht auch im geringen Umfang absorbieren, die absorbierende Komponente für Laserlicht im geringen Ausmaß durchlässig sein. Wesentlich ist dabei, dass eine der Komponenten diese Eigenschaft bezüglich der anderen Komponenten in einer wesentlich größeren Dimension aufweist.

Vorzugsweise wird bei dem vorgeschlagenen Laserdurchstrahlfügeverfahren die Absorptionsschicht von einem Trägermaterial, das die Absorptionsschicht als absorbierende Feststoffauflage oder absorbierende Flüssigstoffauflage trägt, unter Druckeinwirkung auf das transparente Kunststoffmaterial der absorbierenden Komponente übertragen. Dabei wird vorteilhafterweise eine Feststoffauflage oder eine Flüssigstoffauflage verarbeitet, die Laserlicht absorbierende Pigmente enthält. Die Laserlicht absorbierenden Pigmente können beispielsweise Kohlenstoffpartikel sein. Sie liegen bei der absorbierenden Feststoffauflage in Matrixform vor, d.h. sie sind in einem vorzugsweise festen Bindemittel eingebettet. Dem gegenüber liegen die Laserlicht absorbierenden Pigmente bei der absorbierenden Flüssigstoffauflage in Suspensionsform vor, d.h. sie sind in einem flüssigen Aufnahmemittel aufgenommen.

Das Trägermaterial, auf dem die Absorptionsschicht als absorbierende Feststoffauflage oder als absorbierende Flüssigstoffauflage vor dem Übertragen auf eine transparente Komponente angeordnet ist, um diese durch das Übertragen der Absorptionsschicht im Fügebereich zu einer absorbierenden Komponente aus- bzw. umzubilden, kann aus einem beliebigen geeigneten Material hergestellt sein und eine beliebige Geometrie aufweisen. Bei der absorbierenden Feststoffauflage hat sich ein nicht saugfähiges Material und bei der absorbierende Flüssigstoffauflage ein saugfähiges Material als besonders günstig erwiesen. Dabei kann es sich beispielsweise um ein Kunststoffmaterial handeln, das in Form einer homogenen Folie oder eines textilen Stoffgebildes vorliegt. Das Trägermaterial ist entsprechend mit der Feststoffauflage belegt oder mit der Flüssigstoffauflage durchtränkt.

Bei einer bevorzugten Ausführungsform der Erfindung wird ein bandförmiges Trägermaterial benutzt, das mit der absorbierenden Feststoffauflage oder Flüssigstoffauflage auf einer Vorratsrolle angeordnet ist und von dieser abgewickelt wird. Dies ermöglicht, wenn das Laserdurchstrahlfügeverfahren mit einem Laserschweißautomaten durchgeführt wird, eine vollautomatische Erzeugung der Absorptionsschicht auf der als absorbierende Komponente auszubildenden Komponente. Nach dem Übertragen der Absorptionsschicht auf diese Komponente kann der unbrauchbare gewordene Bereich des Trägermaterials auf eine Aufnahmerolle aufgewickelt werden. Bei der Verwendung einer Flüssigstoffauflage kann an Stelle der Vorratsrolle und der Aufnahmerolle auch eine relativ kurze Trägermaterialbandschlaufe vorgesehen sein, die an einer Benetzungsstelle, an der der Flüssigstoff auf das Trägermaterial aufgebracht wird, vorbeigeführt wird. Das umlaufende Trägermaterial nimmt damit erst Flüssigstoff auf und gibt in dann an die absorbierende Komponente ab.

Bei einer vorteilhaften Ausführungsform des Laserdurchstrahlfügeverfahrens wird der Fügebereich von einzelnen voneinander beabstandeten Teilbereichen gebildet. Damit können nicht nur zusammenhängende Verbindungsnähte für die mindestens zwei miteinander zu verbindenden Komponenten geschaffen werden, sondern auch unterbrochene Verbindungsnähte, d.h. lückenlose oder lückenbehaftete Verbindungsnähte an den voneinander beabstandeten Teilbereichen. Natürlich können derartige lückenlose oder lückenbehaftete Verbindungsnähte auch an aneinander angrenzenden Teilbereichen hergestellt werden.

Bei einer bevorzugten und besonders zweckmäßigen Ausführungsform der Erfindung wird die Absorptionsschicht mittels einer Absorptionsschicht-Appliziervorrichtung von dem Trägermaterial auf das transparente Kunststoffmaterial der absorbierenden Komponente übertragen. Sie wird von dem Trägermaterial abgenommen und auf die im Fügebereich absorbierend auszubildende Komponente aufgebracht. Dabei kann die Übertragung händisch oder maschinell erfolgen. Das vorstehend beschriebene Verfahren kann endlos betrieben werden, und ist somit zur vollständig automatisierten Fertigung geeignet. Mit der Absorptionsschicht-Appliziervorrichtung kann die Absorptionsschicht insbesondere auf den Fügebereich mit unterschiedlichen Fügemustern übertragen werden, die unterschiedlich in der Form ausgebildete Verbindungsnähte ermöglicht. Damit können in den vorgesehenen Fügebereichen durchgehende Verbindungsnähte oder punkt- oder strichförmig zusammengesetzte Verbindungsnähte erzeugt werden.

Die erfindungsgemäße Absorptionsschicht-Appliziervorrichtung zum Aufbringen einer Absorptionsschicht auf eine für Laserstrahlung transparente Komponente für das Verbinden von mindestens zwei flächigen biegeschlaffen Komponenten, in wenigstens einem Fügebereich mittels wenigstens einer Verbindungsnaht, im Laserdurchstrahlfügeverfahren, weist mindestens ein kraftbeaufschlagbares Applizierelement und ein diesem zugeordnetes gegenüberliegendes Stützelement auf, zwischen denen ein eine Absorptionsschicht tragendes Trägermaterial zusammen mit der absorbierend auszubildenden Komponente zum Aufbringen der Absorptionsschicht auf das transparente Kunststoffmaterial hindurchführbar ist. Die auf dem Trägermaterial angeordnete Absorptionsschicht ist der absorbierenden Komponente zugewandt, wobei das Trägermaterial mit der Absorptionsschicht und die absorbierende Komponente von dem Applizierelement aneinander sowie an eine Stützfläche des Stützelements anpressbar sind, sodass durch die Druckeinwirkung die Absorptionsschicht von dem Trägermaterial auf das transparente Kunststoffmaterial der absorbierenden Komponente übertragbar ist. Dabei ist die Absorptionsschicht als absorbierende Feststoffauflage oder absorbierende Flüssigstoffauflage von dem Trägermaterial getragen, wobei die absorbierende Komponente größtenteils aus einem für die Laserstrahlung transparenten Kunststoffmaterial besteht und durch Aufbringen der Absorptionsschicht auf das transparente Kunststoffmaterial im Fügebereich zur absorbierenden Komponente wird.

Die Absorptionsschicht-Appliziervorrichtung ist insbesondere zur Durchführung des erfindungsgemäßen Laserdurchstrahlfügeverfahrens geeignet, bei dem wenigstens eine der Komponenten thermoplastisches Kunststoffmaterial aufweist, das in Form einer homogenen Folie oder eines textilen Stoffgebildes aus miteinander verschlungenen Kunststofffasern oder Kunststofffäden vorliegt, und mindestens eine der Komponenten für Laserstrahlung transparent und mindestens eine zumindest im Fügebereich für die Laserstrahlung absorbierend ist, und wobei sich unter Einwirkung der Laserstrahlung mindestens die absorbierende Komponente lokal im Fügebereich erwärmt, dort mindestens partiell aufschmilzt und sich unter Druckbeaufschlagung mit der mindestens einen transparenten Komponente verbindet.

Vorzugsweise ist das Applizierelement als Stempel oder als Rolle ausgebildet. Es kann an seiner der Stützfläche des Stützelements zugewandten Anpressfläche glatt oder profiliert ausgeführt sein. Bei einer bevorzugten Ausführungsform der Erfindung ist der Stempel oder die Rolle strukturiert und weist damit ein Fügemuster auf, das die Geometrie der Verbindungsnaht in Form und Breite bestimmt. Der Stempel oder die Rolle sind günstigerweise austauschbar, sodass auf einfache Weise unterschiedliche Fügemuster realisiert werden können. Auch das Stützelement ist in einer Ausführungsform der Erfindung austauschbar ausgebildet.

Vorzugsweise ist bei der vorgeschlagenen Absorptionsschicht-Appliziervorrichtung das die Absorptionsschicht tragende Trägermaterial auf einer Vorratsrolle aufgewickelt angeordnet, wobei eine Abroll-/Transportvorrichtung das Trägermaterial von der Vorratsrolle abzieht und dem Applizierelement und dem Stützelement zuführt.

Die erfindungsgemäße textile Laserdurchstrahlschweißvorrichtung ist zur Durchführung des obig beschriebenen Laserdurchstrahlfügeverfahrens geeignet, insbesondere daran angepasst. Sie ist in erster Linie für die Herstellung von Kleidungstücken vorgesehen, bei denen Bekleidungsteile über eine verbindende Schweißnaht im Laserdurchstrahlfügeverfahren miteinander verbunden werden, von denen wenigstens eines thermoplastisches Kunststoffmaterial aufweist, das in Form einer homogenen Folie oder eines textilen Stoffgebildes aus miteinander verschlungenen Kunststofffasern oder Kunststofffäden vorliegt. Diese textile Laserdurchstrahlschweißvorrichtung weist vorteilhafterweise in einer bevorzugten Ausführungsform eine erfindungsgemäße Absorptionsschicht-Appliziervorrichtung, wie vorstehend beschrieben, auf. Sie ist bevorzugt als Teil eines textilen Laserschweißautomats ausgebildet, die für das Verbinden von mindestens zwei flächigen biegeschlaffen Komponenten in wenigstens einem Fügebereich mittels wenigstens einer Verbindungsnaht im Laserdurchstrahlfügeverfahren vorgesehen ist, bei dem als absorbierende Komponente eine Komponente benutzt wird, die größtenteils aus einem für die Laserstrahlung transparenten Kunststoffmaterial besteht, auf das im Fügebereich eine Absorptionsschicht für die Laserstrahlung aufgebracht wird.

Die erfindungsgemäße textile Komponentenschneidevorrichtung ist zum Zuschneiden von mindestens einer biegeschlaffen Komponente, die mit einer anderen biegeschlaffen Komponente in wenigstens einem Fügebereich mittels wenigstens einer Verbindungsnaht im Laserdurchstrahlfügeverfahren verbindbar ist, geeignet. Sie ist in erster Linie für die Herstellung von Kleidungstücken vorgesehen, bei denen Bekleidungsteile über eine verbindende Schweißnaht im Laserdurchstrahlfügeverfahren miteinander verbunden werden, von denen wenigstens eines thermoplastisches Kunststoffmaterial aufweist, das in Form einer homogenen Folie oder eines textilen Stoffgebildes aus miteinander verschlungenen Kunststofffasern oder Kunststofffäden vorliegt. Diese textile Komponentenschneidevorrichtung weist eine erfindungsgemäße Absorptionsschicht-Appliziervorrichtung, wie vorstehend beschrieben, auf. Diese ist dafür vorgesehen, um bei einer Komponente, die größtenteils aus einem für die Laserstrahlung transparenten Kunststoffmaterial besteht und als absorbierende Komponente benutzt wird, im Fügebereich eine Absorptionsschicht für die Laserstrahlung aufzubringen. Dies ermöglicht, die Absorptionsschicht vor oder beim Zuschneiden dieser Komponente zu applizieren. Die textile Komponentenschneidevorrichtung kann Teil eines textilen Komponentenschneideautomaten oder eines textilen Handschneidetisches sein. Sie kann aber auch an einem anderen beliebigen Arbeitsplatz angeordnet oder in anderen Textilfertigungsautomaten integriert sein.

Nachfolgend wird die Erfindung anhand eines in der Zeichnung dargestellten Ausführungsbeispiels näher erläutert. Weitere Merkmale der Erfindung ergeben sich aus der folgenden Beschreibung des Ausführungsbeispiels der Erfindung in Verbindung mit den Ansprüchen und der beigefügten Zeichnung. Die einzelnen Merkmale der Erfindung können für sich allein oder zu mehreren bei unterschiedlichen Ausführungsformen der Erfindung verwirklicht sein. Es zeigen in schematischer Darstellung:
- Figur 1: eine erfindungsgemäße textile Laserdurchstrahlschweißvorrichtung in schematischer Darstellung, die mit einer erfindungsgemäßen Absorptionsschicht-Appliziervorrichtung mit Vorratsrolle ausgestattet ist; und
- Figur 2: eine vergrößerte schematische Darstellung der Absorptionsschicht-Appliziervorrichtung aus Figur 1.
- Figur 3: eine erfindungsgemäße textile Komponentenschneidevorrichtung in schematischer Darstellung, die mit einer erfindungsgemäßen Absorptionsschicht-Appliziervorrichtung mit Vorratsrolle ausgestattet ist.

Das dargestellte Ausführungsbeispiel einer erfindungsgemäßen textilen Laserdurchstrahlschweißvorrichtung 1 weist ein Maschinengehäuse 3 auf, das mit einer Arbeitsfläche 4 für die zu verbindenden Komponenten 2, 2' zur Auflage und einem darüber angeordneten auskragenden Arbeitsarm 5 ausgebildet ist. In dem Arbeitsarm 5 ist eine zu ihrer Längsachse oszillierend antreibbare Hubstange 6 zur Aufnahme eines Nahtherstellwerkzeugs 7 zum Erzeugen einer Verbindungsnaht 21 angeordnet. Die Hubstange 6 ist mit einer in den Figuren nicht dargestellten Hubstangenantriebsvorrichtung, die vorzugsweise einen elektrischen Antriebsmotor besitzt, verbunden.

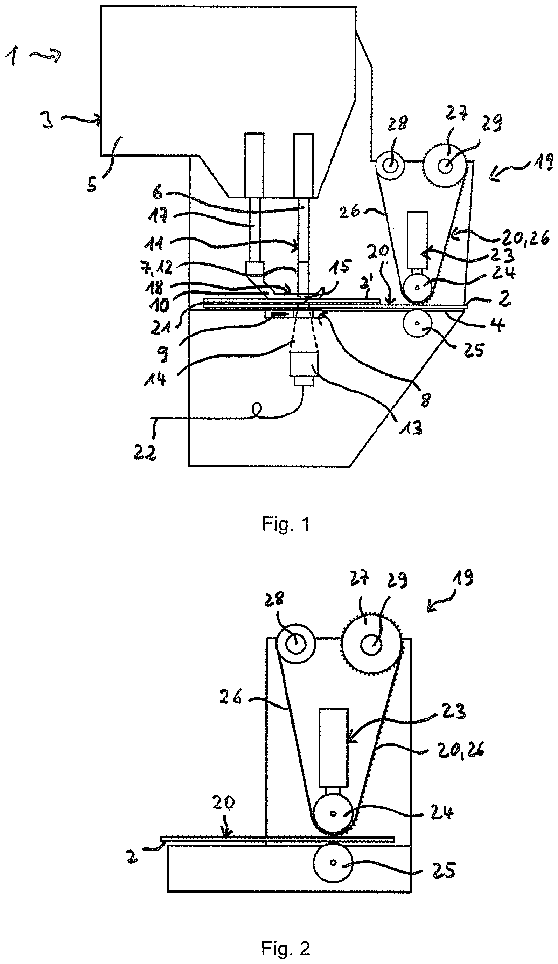

Die Laserdurchstrahlschweißvorrichtung 1 weist zudem eine in der Arbeitsfläche 4 aufgenommene Stützplatte 8 für die Komponenten 2, 2' auf, zu der die Hubstange 6 senkrecht angeordnet ist und in die mindestens ein oszillierend antreibbarer Komponentenschieber 9 eingesetzt ist. Der Komponentenschieber 9 ist mit einer nicht dargestellten Komponentenschieberantriebsvorrichtung verbunden, die vorzugsweise ein elektrisches Treibwerk besitzt. Gemäß Figur 1 weist die Laserdurchstrahlschweißvorrichtung 1 außerdem einen absenkbaren kraftbeaufschlagten Komponentendrückerfuß 10 auf, der im abgesenkten Zustand federnd auf der Stützplatte 8 aufliegt und mit dem Komponentenschieber 9 zum Vorschub der beiden Komponenten 2, 2' zusammenarbeitet.

Die Hubstange 6 steht über den Arbeitsarm 5 mit einem unteren Stangenende 11 vor, an dem unten ein Nahtpressstempel 12 als Nahtherstellwerkzeug 7 angeordnet ist. Bei der Laserdurchstrahlschweißvorrichtung 1 ist ein Laseroptikkopf 13 vorgesehen, der mit einer in den Figuren 1 bis 3 nicht abgebildeten Laserquelle über einen Lichtleiter 22 verbunden ist. Von der Laserquelle wird ein Laserstrahl 14 dem Laseroptikkopf 13 zugeführt, der über den Laseroptikkopf 13 auf die Stützplatte 8 gerichtet ist, und dort einen Laserlichtspot 15 bildet.

Bei dem Ausführungsbeispiel gemäß der Figur 1 ist der Laseroptikkopf 13 in dem Maschinengehäuse 3 unterhalb der Arbeitsfläche 4 angeordnet und bestrahlt die Stützplatte 8 der Arbeitsfläche 4 von unten. Es ist auch möglich Laseroptikkopf 13 jeweils an dem unteren Ende 11 der Hubstange 6 anzuordnen, der die Stützplatte 8 der Arbeitsfläche 4 direkt oder indirekt von oben bestrahlt. Dabei ist der Komponentendrückerfuß 10 von wenigstens einer in dem Maschinengehäuse 3 angeordneten mechanischen oder pneumatischen Federung kraftbeaufschlagt.

Bei dem in der Figur 1 gezeigten Ausführungsbeispiel weist die Stützplatte 8 der Arbeitsfläche 4 ein lichtdurchlässiges Arbeitsfenster 16 auf, das unterhalb des Nahtpressstempels 12 angeordnet ist, wobei der Laserstrahl 14 von unten auf das Arbeitsfenster 16 der Stützplatte 8 gerichtet ist. Der Laserstrahl durchdringt das Arbeitsfenster 16 und beaufschlagt die zu verbindenden Komponenten mit Laserlicht. Das Arbeitsfenster 16 ist in Arbeitsrichtung der Laserdurchstrahlschweißvorrichtung 1 hinter dem Komponentenschieber 9 angeordnet. Der Komponentendrückerfuß 10 ist an einem Tragearm 17 einer in der Figur 1 nicht veranschaulichten Betätigungseinrichtung befestigt, mit der der Komponentendrückerfuß 10 in vertikaler Richtung verschiebbar ist. Der Komponentendrückerfuß 10 und der Nahtpressstempel 12 sind aus Metall hergestellt und somit für den Laserstrahl 14 lichtundurchlässig. Der Komponentendrückerfuß 10 weist eine Fußausnehmung 18 zum Durchtritt des Nahtpressstempels 12 auf, wobei die Fußausnehmung 18 an die Querschnittsform des Nahtpressstempels 12 angepasst ist.

An dem Maschinengehäuse 3 ist eine Absorptionsschicht-Appliziervorrichtung 19 zum Aufbringen einer Absorptionsschicht 20 auf eine der für die Laserstrahlung transparente Komponenten 2, 2' angeordnet. Die Absorptionsschicht-Appliziervorrichtung 19 weist ein kraftbeaufschlagbares Applizierelement 23 mit einer Umlenkrolle 24 und ein diesem zugeordnetes gegenüberliegende Stützelement 25 mit einer Gegenrolle 30 für die Umlenkrolle 24 auf, zwischen denen ein eine Absorptionsschicht 20 tragendes Trägermaterial 26 zusammen mit der absorbierend auszubildenden Komponente 2 zum Aufbringen der Absorptionsschicht 20 auf das transparente Kunststoffmaterial der Komponente 2 hindurchgeführt wird. Das Trägermaterial 26 mit der darauf angeordneten Absorptionsschicht 20 ist als bandförmiges Material ausgebildet und wird von einer auf einer Abrolleinrichtung 29 angeordneten Vorratsrolle 27 abgewickelt und nach dem Aufbringen der Absorptionsschicht 20 auf die Komponente 2 mittels des Applizierelements 23 über eine Aufrolleinrichtung 28 aufgewickelt. Die auf dem Trägermaterial 26 angeordnete Absorptionsschicht 20 ist der absorbierenden Komponente 2 zugewandt, wobei das Trägermaterial 26 mit der Absorptionsschicht 20 und die absorbierende Komponente 2 von dem Applizierelement 23 aneinander sowie gegen das Stützelement 25 gepresst werden, sodass durch die Druckeinwirkung die Absorptionsschicht 20 von dem Trägermaterial 26 auf das transparente Kunststoffmaterial der absorbierenden Komponente 2 übertragen wird.

In Figur 2 ist die Absorptionsschicht-Appliziervorrichtung 19 allein und vergrößert dargestellt. Eine derartige Absorptionsschicht-Appliziervorrichtung 19 kann auch als Zubehörteil zu einer bestehenden Laserdurchstrahlschweißvorrichtung 1 ausgebildet sein. Die kraftbeaufschlagte Umlenkrolle 24 oder die Gegenrolle 25 können eine nicht dargestellte Strukturierung für ein Fügemuster aufweisen und zur Aufbringung unterschiedliche Fügemuster austauschbar ausgestaltet sein. Die Absorptionsschicht 20 ist in dem Ausführungsbeispiel als absorbierende Feststoffauflage ausgebildet und weist Laserlicht absorbierende Pigmente auf. Sie kann auch als absorbierende Flüssigstoffauflage auf dem Trägermaterial 26 aufgebracht sein.

An Stelle der Vorratsrolle 27 und der Aufrollvorrichtung 28 kann bei einer Flüssigstoffauflage auch eine relativ kurze Trägermaterialbandschlaufe vorgesehen sein, die an einer Benetzungsstelle, an der der Flüssigstoff auf das Trägermaterial 26 aufgebracht wird, vorbeigeführt wird. Das umlaufende Trägermaterial 26 nimmt damit erst Flüssigstoff auf und gibt in dann an die absorbierende Komponente ab.

Das dargestellte Ausführungsbeispiel einer erfindungsgemäßen textilen Komponentenschneidevorrichtung 31 weist ein Maschinengehäuse 3' auf, das mit einer Arbeitsfläche 4' für die zuzuschneidenden Komponenten 2, 2' zur Auflage und einem darüber angeordneten auskragenden Arbeitsarm 5' ausgebildet ist. In dem Arbeitsarm 5' ist eine zu ihrer Längsachse oszillierend antreibbare Hubstange 6' zur Aufnahme eines Schneidewerkzeugs 7' zum Zuschneiden der Komponenten 2, 2' angeordnet. Die Hubstange 6' ist mit einer in den Figuren nicht dargestellten Hubstangenantriebsvorrichtung, die vorzugsweise einen elektrischen Antriebsmotor besitzt, verbunden.

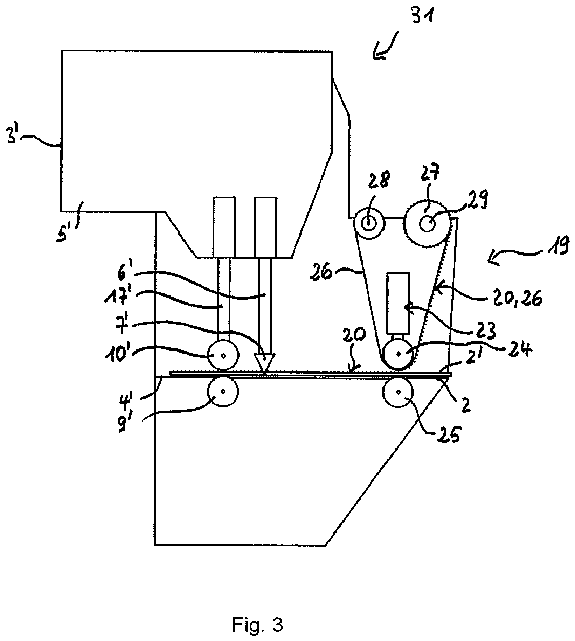

Die Hubstange 6' der Komponentenschneidevorrichtung 31 ist senkrecht zu der Arbeitsfläche 4' für die Komponenten 2,2' angeordnet ist, wobei in die Arbeitsfläche 4' mindestens eine antreibbare Komponentenfördererrolle 9' eingesetzt ist. Der Komponentenfördererrolle 9' ist mit einer nicht dargestellten Antriebsvorrichtung verbunden, die vorzugsweise ein elektrisches Treibwerk besitzt. Gemäß der Figur 3 weist die Komponentenschneidevorrichtung 31 eine absenkbare kraftbeaufschlagte Komponentendrückerrolle 10' auf, der im abgesenkten Zustand federnd an der Komponentenfördererrolle 9' anliegt und mit der Komponentenfördererrolle 9' zum Vorschub der beiden Komponenten 2, 2' zusammenarbeitet. Die Komponentendrückerrolle 10' ist an einem Tragearm 17' einer in der Figur 3 nicht veranschaulichten Betätigungseinrichtung befestigt, mit der die Komponentendrückerrolle 10' in vertikaler Richtung verschiebbar ist.

An dem Maschinengehäuse 3' ist eine Absorptionsschicht-Appliziervorrichtung 19 zum Aufbringen einer Absorptionsschicht 20 auf eine der für die Laserstrahlung transparente Komponenten 2,2' angeordnet. Die Absorptionsschicht-Appliziervorrichtung 19 entspricht der in der Figur 2 dargestellten und vorstehend beschriebenen Absorptionsschicht-Appliziervorrichtung 19.

## Patentansprüche

1. Laserdurchstrahlfügeverfahren zum Verbinden von mindestens zwei flächigen biegeschlaffen Komponenten (2, 2'), in wenigstens einem Fügebereich mittels wenigstens einer Verbindungsnaht, wobei Komponenten (2, 2') verwendet werden, von denen wenigstens eine thermoplastisches Kunststoffmaterial aufweist, das in Form einer homogenen Folie oder eines textilen Stoffgebildes aus miteinander verschlungenen Kunststofffasern oder Kunststofffäden vorliegt, und von denen mindestens eine für Laserstrahlung transparent und mindestens eine zumindest im Fügebereich für die Laserstrahlung absorbierend ist, und wobei unter Einwirkung der Laserstrahlung mindestens die absorbierende Komponente (2, 2') lokal im Fügebereich erwärmt, dort mindestens partiell aufgeschmolzen und unter Druckbeaufschlagung mit der mindestens einen transparenten Komponente verbunden wird, **dadurch gekennzeichnet, dass**
als absorbierende Komponente (2, 2') eine Komponente (2) benutzt wird, die größtenteils aus einem für die Laserstrahlung transparenten Kunststoffmaterial besteht, auf das im Fügebereich eine Absorptionsschicht (20) für die Laserstrahlung aufgebracht wird.

2. Laserdurchstrahlfügeverfahren nach Anspruch 1, **dadurch gekennzeichnet, dass** die Absorptionsschicht (20) von einem Trägermaterial (26), das die Absorptionsschicht (20) als absorbierende Feststoffauflage trägt, unter Druckeinwirkung auf das transparente Kunststoffmaterial der absorbierenden Komponente (2) übertragen wird.

3. Laserdurchstrahlfügeverfahren nach Anspruch 1, **dadurch gekennzeichnet, dass** die Absorptionsschicht (20) von einem Trägermaterial (26), das die Absorptionsschicht (20) als absorbierende Flüssigstoffauflage trägt, unter Druckeinwirkung auf das transparente Kunststoffmaterial der absorbierenden Komponente (2) übertragen wird.

4. Laserdurchstrahlfügeverfahren nach Anspruch 2 oder 3, **dadurch gekennzeichnet, dass** ein bandförmiges Trägermaterial (26) benutzt wird.

5. Laserdurchstrahlfügeverfahren nach Anspruch 2 bis 4, **dadurch gekennzeichnet, dass** eine Feststoffauflage oder eine Flüssigstoffauflage verarbeitet wird, die Laserlicht absorbierende Pigmente enthält.

6. Laserdurchstrahlfügeverfahren nach einem der vorstehenden Ansprüche, **dadurch gekennzeichnet, dass** der Fügebereich von einzelnen voneinander beabstandeten Teilbereichen gebildet wird.

7. Laserdurchstrahlfügeverfahren nach einem der vorstehenden Ansprüche 2 bis 6, **dadurch gekennzeichnet, dass** Absorptionsschicht (20) mittels einer Absorptionsschicht-Appliziervorrichtung (19) von dem Trägermaterial (26) auf das transparente Kunststoffmaterial der absorbierende Komponente (2) übertragen wird.

8. Absorptionsschicht-Appliziervorrichtung (19) zum Aufbringen einer Absorptionsschicht (20) auf eine für Laserstrahlung transparente Komponente (2, 2') zum Verbinden von mindestens zwei flächigen biegeschlaffen Komponenten im Laserdurchstrahlfügeverfahren, in wenigstens einem Fügebereich mittels wenigstens einer Verbindungsnaht, wobei wenigstens eine der Komponenten thermoplastisches Kunststoffmaterial aufweist, das in Form einer homogenen Folie oder eines textilen Stoffgebildes aus miteinander verschlungenen Kunststofffasern oder Kunststofffäden vorliegt, und mindestens eine der Komponenten für Laserstrahlung transparent und mindestens eine zumindest im Fügebereich für die Laserstrahlung absorbierend ist, und wobei sich unter Einwirkung der Laserstrahlung mindestens die absorbierende Komponente lokal im Fügebereich erwärmt, dort mindestens partiell aufschmilzt und sich unter Druckbeaufschlagung mit der mindestens einen transparenten Komponente verbindet, **gekennzeichnet durch** mindestens ein kraftbeaufschlagbares Applizierelement (23, 24) und ein diesem gegenüberliegendes Stützelement (25, 30), zwischen denen ein eine Absorptionsschicht (20) tragendes Trägermaterial (26), das die Absorptionsschicht (20) als absorbierende Feststoffauflage oder absorbierende Flüssigstoffauflage trägt, zusammen mit der absorbierenden Komponente (2, 2'), die größtenteils aus einem für die Laserstrahlung transparenten Kunststoffmaterial besteht, zur Aufbringen der Absorptionsschicht auf das transparente Kunststoffmaterial der absorbierenden Komponente (2,2') hindurchführbar ist und von dem Applizierelement (23) aneinander sowie an das Stützelement (25) anpressbar sind, sodass **durch** die Druckeinwirkung die Absorptionsschicht (20) von dem Trägermaterial (26) auf das transparente Kunststoffmaterial der absorbierenden Komponente (2) übertragbar ist.

9. Absorptionsschicht-Appliziervorrichtung (19) nach Anspruch 8, **dadurch gekennzeichnet, dass** das Applizierelement (23) ein Stempel oder eine Rolle ist.

10. Absorptionsschicht-Appliziervorrichtung (19) nach Anspruch 8 oder 9, **dadurch gekennzeichnet, dass** der Stempel oder die Rolle strukturiert ist und damit ein Fügemuster aufweist.

11. Absorptionsschicht-Appliziervorrichtung (19) nach einem der vorstehenden Ansprüche 9 bis 11, **dadurch gekennzeichnet, dass** das Applizierelement (23) und/oder das Stützelement (25) austauschbar ist.

12. Absorptionsschicht-Appliziervorrichtung (19) nach einem der vorstehenden Ansprüche 8 bis 11, **dadurch gekennzeichnet, dass** das die Absorptionsschicht (20) tragende Trägermaterial (26) auf einer aufgewickelten Vorratsrolle (27) angeordnet ist und dass eine Abroll-/Transportvorrichtung (29) das Trägermaterial (20) dem Applizierelement (23) und dem Stützelement (25) zuführt.

13. Textile Laserdurchstrahlschweißvorrichtung (1), **dadurch gekennzeichnet, dass** sie zur Durchführung des Laserdurchstrahlfügeverfahrens nach einem der vorstehenden Ansprüche 1 bis 8 angepasst ist.

14. Textile Laserdurchstrahlschweißvorrichtung (1) nach Anspruch 13, **dadurch gekennzeichnet, dass** sie eine Absorptionsschicht-Appliziervorrichtung (19) nach einem der vorstehenden Ansprüche 8 bis 12 aufweist.

15. Textile Komponentenschneidevorrichtung (31) zum Zuschneiden von mindestens einer biegeschlaffen Komponente, die mit einer anderen biegeschlaffen Komponente in wenigstens einem Fügebereich mittels wenigstens einer Verbindungsnaht im Laserdurchstrahlfügeverfahren verbindbar ist, **dadurch gekennzeichnet, dass** sie eine Absorptionsschicht-Appliziervorrichtung (19) nach einem der vorstehenden Ansprüche 8 bis 12 aufweist.

## Geänderte Patentansprüche

### Geänderte Patentansprüche gemäss Regel 137(2) EPÜ.

1. Laserdurchstrahlfügeverfahren zum Verbinden von mindestens zwei flächigen biegeschlaffen Komponenten (2, 2'), in wenigstens einem Fügebereich mittels wenigstens einer Verbindungsnaht, wobei Komponenten (2, 2') verwendet werden, von denen wenigstens eine thermoplastisches Kunststoffmaterial aufweist, das in Form einer homogenen Folie oder eines textilen Stoffgebildes aus miteinander verschlungenen Kunststofffasern oder Kunststofffäden vorliegt, und von denen mindestens eine für Laserstrahlung transparent und mindestens eine zumindest im Fügebereich für die Laserstrahlung absorbierend ist, und wobei unter Einwirkung der Laserstrahlung mindestens die absorbierende Komponente (2, 2') lokal im Fügebereich erwärmt, dort mindestens partiell aufgeschmolzen und unter Druckbeaufschlagung mit der mindestens einen transparenten Komponente verbunden wird, wobei als absorbierende Komponente (2, 2') eine Komponente (2) benutzt wird, die größtenteils aus einem für die Laserstrahlung transparenten Kunststoffmaterial besteht, auf das im Fügebereich eine Absorptionsschicht (20) für die Laserstrahlung aufgebracht wird, **dadurch gekennzeichnet, dass** die Absorptionsschicht (20) von einem Trägermaterial (26), das die Absorptionsschicht (20) als absorbierende Flüssigstoffauflage trägt, unter Druckeinwirkung auf das transparente Kunststoffmaterial der absorbierenden Komponente (2) übertragen wird.

2. Laserdurchstrahlfügeverfahren nach Anspruch 1, **dadurch gekennzeichnet, dass** ein bandförmiges Trägermaterial (26) benutzt wird.

3. Laserdurchstrahlfügeverfahren nach Anspruch 1 oder 2, **dadurch gekennzeichnet, dass** eine Flüssigstoffauflage verarbeitet wird, die Laserlicht absorbierende Pigmente enthält.

4. Laserdurchstrahlfügeverfahren nach einem der vorstehenden Ansprüche, **dadurch gekennzeichnet, dass** der Fügebereich von einzelnen voneinander beabstandeten Teilbereichen gebildet wird.

5. Laserdurchstrahlfügeverfahren nach einem der vorstehenden Ansprüche 2 bis 4, **dadurch gekennzeichnet, dass** Absorptionsschicht (20) mittels einer Absorptionsschicht-Appliziervorrichtung (19) von dem Trägermaterial (26) auf das transparente Kunststoffmaterial der absorbierende Komponente (2) übertragen wird.

6. Absorptionsschicht-Appliziervorrichtung (19) zum Aufbringen einer Absorptionsschicht (20) auf eine für Laserstrahlung transparente Komponente (2, 2') zum Verbinden von mindestens zwei flächigen biegeschlaffen Komponenten im Laserdurchstrahlfügeverfahren, in wenigstens einem Fügebereich mittels wenigstens einer Verbindungsnaht, wobei wenigstens eine der Komponenten thermoplastisches Kunststoffmaterial aufweist, das in Form einer homogenen Folie oder eines textilen Stoffgebildes aus miteinander verschlungenen Kunststofffasern oder Kunststofffäden vorliegt, und mindestens eine der Komponenten für Laserstrahlung transparent und mindestens eine zumindest im Fügebereich für die Laserstrahlung absorbierend ist, und wobei sich unter Einwirkung der Laserstrahlung mindestens die absorbierende Komponente lokal im Fügebereich erwärmt, dort mindestens partiell aufschmilzt und sich unter Druckbeaufschlagung mit der mindestens einen transparenten Komponente verbindet, **gekennzeichnet durch** mindestens ein kraftbeaufschlagbares Applizierelement (23, 24) und ein diesem gegenüberliegendes Stützelement (25, 30), zwischen denen ein eine Absorptionsschicht (20) tragendes Trägermaterial (26), das die Absorptionsschicht (20) als absorbierende Flüssigstoffauflage trägt, zusammen mit der absorbierenden Komponente (2, 2'), die größtenteils aus einem für die Laserstrahlung transparenten Kunststoffmaterial besteht, zur Aufbringen der Absorptionsschicht auf das transparente Kunststoffmaterial der absorbierenden Komponente (2,2') hindurchführbar ist und von dem Applizierelement (23) aneinander sowie an das Stützelement (25) anpressbar sind, sodass **durch** die Druckeinwirkung die Absorptionsschicht (20) von dem Trägermaterial (26) auf das transparente Kunststoffmaterial der absorbierenden Komponente (2) übertragbar ist.

7. Absorptionsschicht-Appliziervorrichtung (19) nach Anspruch 6, **dadurch gekennzeichnet, dass** das Applizierelement (23) ein Stempel oder eine Rolle ist.

8. Absorptionsschicht-Appliziervorrichtung (19) nach Anspruch 6 oder 7, **dadurch gekennzeichnet, dass** der Stempel oder die Rolle strukturiert ist und damit ein Fügemuster aufweist.

9. Absorptionsschicht-Appliziervorrichtung (19) nach einem der vorstehenden Ansprüche 6 bis 8, **dadurch gekennzeichne**t, dass das Applizierelement (23) und/oder das Stützelement (25) austauschbar ist.

10. Absorptionsschicht-Appliziervorrichtung (19) nach einem der vorstehenden Ansprüche 6 bis 9, **dadurch gekennzeichnet, dass** das die Absorptionsschicht (20) tragende Trägermaterial (26) auf einer aufgewickelten Vorratsrolle (27) angeordnet ist und dass eine Abroll-/Transportvorrichtung (29) das Trägermaterial (20) dem Applizierelement (23) und dem Stützelement (25) zuführt.

11. Textile Laserdurchstrahlschweißvorrichtung (1), **dadurch gekennzeichnet, dass** sie zur Durchführung des Laserdurchstrahlfügeverfahrens nach einem der vorstehenden Ansprüche 1 bis 5 angepasst ist.

12. Textile Laserdurchstrahlschweißvorrichtung (1) nach Anspruch 11, **dadurch gekennzeichnet, dass** sie eine Absorptionsschicht-Appliziervorrichtung (19) nach einem der vorstehenden Ansprüche 6 bis 10 aufweist.

13. Textile Komponentenschneidevorrichtung (31) zum Zuschneiden von mindestens einer biegeschlaffen Komponente, die mit einer anderen biegeschlaffen Komponente in wenigstens einem Fügebereich mittels wenigstens einer Verbindungsnaht im Laserdurchstrahlfügeverfahren verbindbar ist, **dadurch gekennzeichnet, dass** sie eine Absorptionsschicht-Appliziervorrichtung (19) nach einem der vorstehenden Ansprüche 6 bis 10 aufweist.
